# EUROPEAN PATENT SPECIFICATION

(11) **EP 1 545 237 B1**
(45) Date of publication and mention of the grant of the patent: **24.06.2009**
(21) Application number: 03787523.4
(22) Date of filing: 18.08.2003
(51) Int. Cl.: A23J 3/22, A23B 7/08

(54) **SHELF STABLE MEAT ANALOGUES COMPRISING GLYCEROL AND GLUCOSE**
LAGERSTABILE FLEISCHÄHNLICHE PRODUKTE MIT GLYCERIN UND GLUKOSE
ANALOGUES DE VIANDE DE LONGUE CONSERVATION COMPRENANT DU GLYCEROL ET DU GLUCOSE

(30) Priority: 16.08.2002 AU 2002950897
(43) Date of publication of application: 29.06.2005
(73) Proprietor: Mars Incorporated, McLean, Virginia 22101-3883 (US)
(72) Inventor: MERRICK, Richard, Ralgan, NSW 2795 (AU)
(74) Representative: Rees, David Christopher
(86) International application number: PCT/AU2003/001045
(87) International publication number: WO 2004/016097

(56) References cited:
- WO-A-00/69276
- WO-A-01/17364
- US-A- 3 202 514
- US-A- 3 904 769
- US-A- 3 968 268
- US-A- 4 055 681
- US-A- 4 070 490
- US-A- 4 534 989
- US-A- 4 743 458
- US-A- 5 665 419
- US-A- 5 922 392
- HEGENBART S.: 'Exploring dimensions in intermediate moisture foods', [Online] 19 February 2001, XP002991903 Retrieved from the Internet: <URL:http://www.foodproductdesign.com/archi ve/1993/0793CS.html>
- TAOUKIS P.S. ET AL.: 'Intermediate-moisture foods', [Online] XP002991904 Retrieved from the Internet: <URL:http://www.fsci.umn.edu/Ted_Labuza/pap ers/IMF.pdf>

## Description

### FIELD OF THE INVENTION

The present invention broadly relates to the manufacture of edible proteinaceous products, in particular texturised protein products (TPP's) for human and/or animal consumption. In particular, the invention relates to a shelf-stable TPP of intermediate moisture and a method and apparatus for the manufacture of same.

### BACKGROUND OF THE INVENTION

The industrial manufacture of meat analogue products from protein-rich precursor materials, including plant based precursors such as cereal grain protein (of wheat, rice, or maize; vital or with residual starch), defatted oil seed, cereal and bean flours, meals and derivatives (e.g. defatted soy flour, soy protein concentrates, wheat flour), or animal based precursors such as meat by-products obtained by mechanical separation, fish meal, dried egg white powder and others, alone or in combination, is a well-established practice. Extrusion cooking technology is the most widely used of different possible manufacturing methods to obtain such meat analogues.

The general state of the prior art with respect to such products and processes for their manufacture is surveyed in detail in patent document No. WO 00/69276, by Effem Foods Pty Ltd. This document discloses a method of manufacturing a texturised protein product that mimics the appearance of flaked fish meat, shredded chicken meat or other meat products, as well as an apparatus for manufacturing such product. In particular, the document discloses a suitable formulation for a texturised protein product that enables the TPP to be formed in a high-moisture, extrusion cooking process, and to be mechanically shredded into flakes that closely resemble an animal protein product in texture and structure, such as flaked fish meat or shredded chicken meat.

However, the technology disclosed in WO 00/69276 does not provide a TPP that is suitable for all desirable applications. For example, it is desirable to include such "visually authentic" pieces as a direct inclusion in 'dry' or semi-moist packeted pet foods (as compared to moist, canned pet foods), in order to reinforce the impression to the purchaser that the product contains 'real' fish or chicken. The relatively high moisture levels of the product disclosed in WO 00/69276 would prevent their direct inclusion in such dry or semi-moist packeted products, as their moisture content would impart a limited shelf life to the overall product, reducing their commercial feasibility. Inclusion of such TPP products in an unsterilised, packeted environment would be likely to lead to spoilage via the development of mould or other spoilage organisms within a few hours of manufacture. In order to be commercially feasible, the shelf life of packeted products, which are usually not sterilized, needs to be at least nine months, and preferably 12 months, thus making the inclusion of high-moisture TPP difficult.

An obvious solution to this problem would be to dry the TPP in order to decrease its relative water activity to <0.8 in order to significantly reduce the activity of spoilage organisms. However, this would significantly increase the hardness of this type of TPP, thereby greatly decreasing its acceptability to the animal.

In this document, the term 'relative water activity' is used according to the meaning it is usually accorded in the art, that being the proportional availability of the present water molecules to react relative to pure liquid water.

Reformulation of the TPP may be undertaken in order to reduce water activity, such as by increasing the cereal content. However, such reformulations will tend to have deleterious effects on the texture and palatability of the TPP, and may also adversely affect the ability of processing equipment to effectively produce the TPP in the desired form. For example, general decreases in formulated moisture levels will lead to greater work being done by the extruder screw as the material passes through it. This results in greater heat development in the material, which may lead to expansion, or 'puffing' of the product. As this would tend to ruin the non-expanded, striated, meat-like appearance intended, such a solution is not desirable.

A common way to reduce water activity while maintaining product texture is to incorporate one or more humectant materials in the formulation. However, for the type of product described in WO 00/69276, i.e. high-moisture extruded TPP, it has been found that many of the common humectant systems do not provide a solution to the problem. The incorporation of sugars at 12% by mass of the formulation, as used in other semi-moist pet foods, tended to cause blockages and product burning in the high-shear twin-screw extruders that are necessary for the manufacture of this type of product.

Similarly, the use of a lower viscosity humectant material, such as a sugar solution, resulted in an inability of the process to provide the correct 'striated' texture for the product. This is because lower viscosity / higher fluid content feedstocks are not capable of producing a textured extrudate, especially for this type of extrusion.

Other liquid humectants, such as propylene glycol, are available for extending the shelf life of such TPP products. However, these materials also tend to compromise the texture of the product when added at the levels necessary to produce the shelf-life extension sought. Furthermore, propylene glycol is not suitable for TPP that is to be fed to felines, as it is toxic for these animals. It also tends to produce a flavour taint that is undesirable.

Therefore, it is an object of the invention is to provide a TPP having visual and textural properties similar to those described in WO 00/69276, but with a significantly extended shelf-life, such that it does not require further sterilisation processing. It is another object of the invention to provide a process for the manufacture of same.

### SUMMARY OF THE INVENTION

Accordingly, in a first aspect of the present invention, there is provided a method for manufacturing a texturised proteinaceous meat analogue product, having a relative water activity of lower than 0.8, said method including the steps of:
subjecting, in a food-extruder, a mixture containing 20 to 80% by weight edible proteinaceous materials selected from the group consisting of predetermined mixtures of defatted soy flour, soy meal, soy concentrate, cereal gluten in vital or starch-containing form and egg white powder; up to 5% by weight of edible mineral binding and cross-linking compounds; and up to 50% by weight of an edible humectant system consisting of a mixture of glycerol and glucose of predetermined ratio; to mechanical pressure and added heat sufficient to convert the mixture into a hot protein lava; and
extruding the protein lava through and from a temperature controlled cooling die which cools and increases the viscosity of the protein lava to obtain a cohesive, texturised, extrudate slab or ribbon in which vapour-flashing is substantially inhibited.

Preferably, the product contains 25% by weight glycerol and 5% by weight of glucose. The presence of these humectants allows the TPP to maintain a texture that is soft enough to be acceptable to the consumer, while reducing the water activity to a level that allows a shelf life of at least 12 months in ambient conditions. Unexpectedly, this combination of liquid humectant ingredients does not produce a deleterious effect on product texture or on the ability of the equipment to successfully process the materials. The water activity of the final product can be advantageously set to between 0.55 and 0.68.

Preferably, the temperature of the product components in the extruder is minimised by using a twin-screw extruder with five barrel sections and a screw speed in the range 300rpm to 550rpm, and even more preferably 500rpm. The temperature of the molten lava is preferably restricted to <120°C.

Preferably, the solidified extrudate slab or ribbon is subjected to suitable size-reduction techniques for producing extrudate shreds that resemble in consistency and texture flaked or shredded meat.

Preferably, the size reduction is performed by shredding in a hammer mill having a cage plate with a plurality of elongate discharge openings and a plurality of hammer bars hinged to discs attached to a rotating shaft. Use of the hammer mill as decribed advantageously enables the manufacture of extrudate shreds that resemble, in consistency and texture, flaked fish meat, shredded chicken meat or shredded red meat (such as beef or lamb).

In performing the above method, addition of real meat or meat by-product into the TPP mass is an optional step to enhance flavor and to provide animal protein contents. This addition may occur prior to, during or after the step of subjecting the mixture to mechanical pressure and heat. Preferably, the addition of the meat product or meat by-product occurs during the extrusion step. This real meat or meat by product may be obtained from fish, poultry or from livestock (such as cattle or sheep).

Advantageously, the extrudate is transferred directly from the cooling die to the hammer mill for shredding, as shredding or flaking the extrudate whilst the extrudate slab is still warm provides shreds or flakes of more authentic appearance. Therefore, typically, the time between extrusion and cutting should not exceed 5 minutes.

Preferably, the mixture referred to above has total moisture content of between 15% and 40% by mass.

It will be understood that the extrudate can be conveyed as a continuous band or ribbon directly into the hammer mill, or it may be conveyed in shorter lengths or discontinuous portions.

A preferred formulation of the meat analogue product, which results in extrudate shreds that substantially mimic tuna fish flakes, that can be blended directly into a packeted pet food product, consists of: a dry ingredient mixture, making up 50% of extrudate mass, consisting of 40% defatted soy flour, 40% vital wheat gluten, 0.5% nutritional vitamin supplements, 8.5% mineral supplements, 2.0% flavouring agents, 4.3% colouring agents and 4.7% carbohydrate (all weight %); a humectant blend, making up 30% of extrudate mass, consisting of 83% glycerol and 17% glucose; and injected meat material, making up 20% of extrudate mass, consisting of comminuted material derived from chicken, fish or livestock.

As disclosed in WO 00/69276, a conventional hammer mill, which is generally employed to grind, particulate or pulverise dry, relatively hard materials such as coal, grains, seeds and similar dry materials, can be employed with a modified screen in accordance with this aspect of the invention to shred the proteinaceous, plasto-elastically-resilient, and moisture-rich extrudate slab or ribbon into chunks or pieces that closely resemble in appearance those of shredded tuna fish meat or chicken meat, without otherwise adversely affecting the structure and texturisation of the TPP shreds.

The cooling die may be adapted so as to form an extrudate slab or ribbon having any suitable cross-section (e.g. rectangular or circular).

A production line incorporating the inventive method may be arranged such that continuous manufacturing of shredded TPP extrudate is achieved from metering of the dry ingredients and water into the extruder to metering the extrudate shreds into appropriate vessels for further processing. Alternatively, a further conveyor means can be disposed underneath the hammer mill discharge chute for conveying the meat analogue shreds towards further processing units of an integrated food production line, (e.g. a canning station or the like).

In a further refinement, it has been found to be particularly advantageous in conducting the manufacturing process to employ a conveying and pressurising twin-screw extruder with 4 to 6 barrel sections that are individually temperature controlled, each section having a length to diameter ratio of approximately 4, as used in high moisture extrusion cooking. Temperature settings at the individual barrel sections during the manufacturing process will vary between 60 and 150°C and internal pressure between 3 and 8 MPa, at screw speeds of between 300 to 550 rpm.

In a second aspect, the present invention provides a shredded meat analogue product manufactured in accordance with any one of the processes described above using the formulation of materials referred to above.

Further features and advantages of the invention will be described in the following in relation to preferred embodiments thereof by way of a specific, non-limiting example.

### DETAILED DESCRIPTION OF A PREFERRED EMBODIMENT

The following non-limiting description of a preferred embodiment of the invention is presented with reference to the TPP product, and the manufacturing processes and equipment therefor, as described in detail in patent document No. WO 00/69276.

A TPP product having a fibrous striated structural matrix and resembling tuna white-meat was prepared generally according to the process and formulation details given in Example 2 in the preferred embodiment description of WO 00/69276, except with the changes to formulation and process conditions outlined as follows:

The ingredients listed in Table 1 were weighed out as indicated there, milled through a hammer mill fitted with a screen of size 1.2 - 2 mm and preblended in a ribbon blender for 4 minutes.

**Table 1**

| Ingredient | % by mass |
|---|---|
| Defatted soy flour | 40 |
| Vital wheat gluten | 40 |
| Vitamins | 0.5 |
| Minerals | 8.5 |
| Carbohydrate | 4.7 |
| Flavouring agents | 2.0 |
| Colouring agents | 4.3 |

Added to this mix was a blend of humectants, consisting of 83% glycerol by weight and 17 % glucose by weight. This blended mixture was then fed into the hopper and metered into the extruder (Werner & Pfleiderer C58, fitted with 5 barrel sections) at a rate of 138kg/hr. Comminuted tuna-derived material was injected into the molten material at a rate such that the overall mass-flow ratio of dry material:humectants:tuna material was approximately 5:3:2. The extruder screw speed was set at 530rpm. Temperatures of the barrels were regulated to the values listed in Table 2.

**Table 2**

| Barrel number | Temp °C |
|---|---|
| 1 | 20 |
| 2 | 50-60 |
| 3 | 70-80 |
| 4 | 100-110 |
| 5 | 110-120 |

The dry precursor materials are plasticised and molten into a viscous extrudate as they are conveyed through the extruder barrel sections. The hot melt is extruded through the breaker plate. The extrudate leaving the breaker plate enters the cooling die channel member (cross-sectional dimensions of 50 mm by 7 mm and a length of 400 mm), cooling water inlet temperature being set at about 5°C.

Extrudate product exiting the cooling die as a continuous slab was analysed and shown to have a moisture level of 25% by weight and a water activity of 0.68. The slab was then conveyed directly to the modified hammer mill. The product slab was cut and shredded into pieces of torn, non-uniform appearance, quite similar to canned white tuna pieces. The rotational speed of the hammer discs was set to 1800 - 2000 rpm, whilst a screen with holes of a size of 50 mm by 7 mm was employed.

The shredded pieces obtained had an appearance similar to that of shredded tuna meat. This material has a shelf life in excess of 12 months in ambient conditions.

## Claims

1. A method for manufacturing a texturised proteinaceous meat analogue product, said product having a relative water activity of lower than 0.8 and including 20 to 80% by weight edible proteinaceous materials selected from the group consisting of predetermined mixtures of defatted soy flour, soy meal, soy concentrate, cereal gluten in vital or starch-containing form and egg white powder; up to 5% by weight of edible mineral binding and cross-linking compound; and up to 50% by weight of an edible humectant system consisting of a mixture of glycerol and glucose in a predetermined ratio; said method including:
subjecting, in an extruder, a mixture of materials as defined above, to mechanical pressure and heat sufficient to convert the mixture into a hot protein lava; and
extruding the protein lava through and from a temperature controlled cooling die which cools and increases the viscosity of the protein lava to obtain a cohesive, texturised, extrudate slab or ribbon in which vapour-flashing is substantially inhibited.

2. The method of claim 1, wherein said mixture contains about 25% by weight glycerol and 5% by weight of glucose.

3. The method of any preceding claim, wherein said meat analogue product has a relative water activity of between 0.55 and 0.68.

4. The method of any preceding claim, wherein said extruder is a twin-screw extruder with between four and six barrel sections and a screw speed operating in the range 300rpm to 550rpm.

5. The method of claim 4, wherein said extruder has five barrel sections and said screw speed is 500rpm.

6. The method of claims 4 or 5, wherein each extruder barrel section has a length to diameter ratio of 4.

7. The method of any preceding claim, wherein the temperature of said protein lava is restricted to less than 120°C.

8. The method of any preceding claim, wherein the solidified extrudate slab or ribbon is further subjected to suitable size-reduction techniques for producing extrudate shreds that resemble in consistency and texture flaked or shredded meat.

9. The method of claim 8, wherein said size-reduction includes shredding in a hammer mill.

10. The method of claim 9, wherein said hammer mill includes a cage plate with a plurality of elongate discharge openings and a plurality of hammer bars hinged to discs attached to a rotating shaft.

11. The method of claim 10, wherein the extrudate is transferred directly from the cooling die to the hammer mill.

12. The method of any preceding claim, further including the step of adding meat based product into said mixture.

13. The method claim 12, wherein said meat-product is added directly to said protein lava.

14. The method of any preceding claim, wherein said mixture has a total moisture content of between 15% and 40% by mass.

15. The method of any preceding claim, wherein said mixture includes:
a dry ingredient blend, said dry ingredient blend making up 50% of meat analogue product mass and including by mass 40% defatted soy flour, 40% vital wheat gluten, 0.5% nutritional vitamin supplements, 8.5% mineral supplements, 2.0% flavouring agents, 4.3% colouring agents and 4.7% carbohydrate;
a humectant blend, said humectant blend making up 30% of meat analogue product mass and including 83% glycerol and 17% glucose by mass; and
meat based material, said meat based material making up 20% of extrudate mass and consisting of comminuted material derived from one or more animals selected from the group consisting of poulry, fish, ovines, bovines and porcines.

16. A meat analogue product produced by a process according to any preceding claim.

## Patentansprüche

1. Verfahren zur Herstellung eines texturierten proteinhaltigen fleischähnlichen Produktes, wobei das Produkt eine relative Wasseraktivität von weniger als 0,8 aufweist und 20 bis 80 Gew.-% essbare proteinhaltige Materialien, die ausgewählt sind aus der Gruppe, bestehend aus vorbestimmten Mischungen von entfettetem Sojamehl, Sojaschrotmehl, Sojakonzentrat, Getreidekleber in vitaler oder stärkehaltiger Form und Eiklarpulver; bis zu 5 Gew.-% essbare mineralbindende und vernetzende Verbindungen; und bis zu 50 Gew.-% eines essbaren Feuchthaltesystems, das aus einer Mischung von Glycerol und Glucose in einem vorbestimmten Verhältnis besteht, einschließt; wobei das Verfahren einschließt:
dass, in einem Extruder, eine Mischung von Materialien, wie oben definiert, mechanischem Druck und Wärme in ausreichendem Maße unterworfen wird, um die Mischung in eine heiße Proteinlava umzuwandeln; und
dass die Proteinlava durch und aus einem temperaturgesteuerten Abkühlungsmundstück hinaus extrudiert wird, das die Proteinlava abkühlt und deren Viskosität erhöht, um eine/ein kohäsive/s, texturierte/s Extrudatplatte oder -band zu erhalten, in der/dem Flashverdampfung beträchtlich gehemmt ist.

2. Verfahren nach Anspruch 1, wobei die Mischung etwa 25 Gew.-% Glycerol und 5 Gew.-% Glucose enthält.

3. Verfahren nach einem vorangehenden Anspruch, wobei das fleischähnliche Produkt eine relative Wasseraktivität von zwischen 0,55 und 0,68 aufweist.

4. Verfahren nach einem vorangehenden Anspruch, wobei der Extruder ein Doppelschraubenextruder mit zwischen vier und sechs Zylinderabschnitten und einer Schraubengeschwindigkeit, die im Bereich von 300 UPM bis 550 UPM arbeitet, ist.

5. Verfahren nach Anspruch 4, wobei der Extruder fünf Zylinderabschnitte aufweist und die Schraubengeschwindigkeit 500 UPM beträgt.

6. Verfahren nach Anspruch 4 oder 5, wobei jeder Extruderzylinderabschnitt ein Längen/Durchmesser-Verhältnis von 4 aufweist.

7. Verfahren nach einem vorangehenden Anspruch, wobei die Temperatur der Proteinlava auf weniger als 120°C beschränkt ist.

8. Verfahren nach einem vorangehenden Anspruch, wobei die/das verfestigte Extrudatplatte oder -band weiter geeigneten Größenverringerungstechniken zur Erzeugung von Extrudatstücken unterworfen wird, die in Konsistenz und Textur schuppenförmigem oder geschreddertem Fleisch ähneln.

9. Verfahren nach Anspruch 8, wobei die Größenverringerung das Schreddern in einer Hammermühle einschließt.

10. Verfahren nach Anspruch 9, wobei die Hammermühle eine Käfigplatte mit mehreren länglichen Austrittsöffnungen und mehreren Hammerstangen einschließt, die an Scheiben angelenkt sind, die an einer Drehwelle befestigt sind.

11. Verfahren nach Anspruch 10, wobei das Extrudat direkt aus dem Abkühlungsmundstück in die Hammermühle überführt wird.

12. Verfahren nach einem vorangehenden Anspruch, das weiter den Schritt der Zugabe von fleischbasiertem Produkt in die Mischung hinein einschließt.

13. Verfahren nach Anspruch 12, wobei das Fleischprodukt direkt zur Proteinlava zugegeben wird.

14. Verfahren nach einem vorangehenden Anspruch, wobei die Mischung einen Gesamtfeuchtegehalt von zwischen 15 und 40 Massen-% aufweist.

15. Verfahren nach einem vorangehenden Anspruch, wobei die Mischung einschließt:
ein trockenes Inhaltsstoffgemisch, wobei das trockene Inhaltsstoffgemisch 50% der fleischähnlichen Produktmasse ausmacht und, massenbezogen, 40% entfettetes Sojamehl, 40% vitalen Weizenkleber, 0,5% Nährstoffvitaminergänzungsstoffe, 8,5% Mineralergänzungsstoffe, 2,0% Geschmacksstoffe, 4,3% Färbemittel und 4,7% Kohlehydrat einschließt;
ein Feuchthaltegemisch, wobei das Feuchthaltegemisch 30% der fleischähnlichen Produktmasse ausmacht und, massenbezogen, 83% Glycerol und 17% Glucose einschließt; und
fleischbasiertes Material, wobei das fleischbasierte Material 20% der Extrudatmasse ausmacht und aus zerkleinertem Material besteht, das von einem oder mehreren Tieren erhalten worden ist, ausgewählt aus der Gruppe, bestehend aus Geflügel, Fisch, Schafen, Rindern und Schweinen.

16. Fleischähnliches Produkt, hergestellt mit einem Verfahren nach einem vorangehenden Anspruch.

## Revendications

1. Procédé de fabrication d'un produit analogue à une viande protéique et texturisée, ledit produit ayant une activité de l'eau relative inférieure à 0,8 et comprenant 20 à 80 % en poids de matières protéiques comestibles choisies dans le groupe consistant en des mélanges prédéterminés de farine de soja dégraissée, de farine brute de soja, de concentré de soja, de gluten de céréales sous une forme vitale ou contenant de l'amidon et de poudre de blanc d'oeuf; jusqu'à 5 % en poids de composés de réticulation et de liaison de minéraux comestibles ; et jusqu'à 50 % en poids d'un système d'humidification comestible consistant en un mélange de glycérol et de glucose en un rapport prédéterminé ; ledit procédé comprenant :
la soumission, dans une extrudeuse, d'un mélange de matières comme défini ci-dessus, à une pression mécanique et une chaleur suffisantes pour convertir le mélange en une lave de protéine chaude ; et
l'extrusion de la lave de protéine par et à partir d'une matrice de refroidissement de température régulée qui refroidit et augmente la viscosité de la lave de protéine pour obtenir une plaque ou un ruban d'extrudat texturisé et cohésif dans lequel le flash vapeur est sensiblement inhibé.

2. Procédé selon la revendication 1, dans lequel ledit mélange contient environ 25 % en poids de glycérol et 5 % en poids de glucose.

3. Procédé selon l'une quelconque des revendications précédentes, dans lequel ledit produit analogue à une viande présente une activité de l'eau relative comprise entre 0,55 et 0,68.

4. Procédé selon l'une quelconque des revendications précédentes, dans lequel ladite extrudeuse est une extrudeuse à double vis comportant entre quatre et six sections de fourreau et avec une vitesse de la vis dans la plage de 300 tr/min à 550 tr/min.

5. Procédé selon la revendication 4, dans lequel ladite extrudeuse comporte cinq sections de fourreau et ladite vitesse de la vis est de 500 tr/min.

6. Procédé selon la revendication 4 ou 5, dans lequel chaque section de fourreau d'extrudeuse présente un rapport longueur sur diamètre de 4.

7. Procédé selon l'une quelconque des revendications précédentes, dans lequel la température de ladite lave de protéine est limitée à moins de 120 °C.

8. Procédé selon l'une quelconque des revendications précédentes, dans lequel la plaque ou le ruban d'extrudat solidifié est en outre soumis à des techniques de réduction de taille appropriées pour produire des lambeaux d'extrudat qui ressemblent en consistance et en texture à de la viande mise en flocons ou déchiquetée.

9. Procédé selon la revendication 8, dans lequel ladite réduction de taille comprend le déchiquetage dans un broyeur à marteaux.

10. Procédé selon la revendication 9, dans lequel ledit broyeur à marteaux comprend une grille avec une pluralité d'ouvertures d'évacuation allongées et une pluralité de barres de marteau articulées sur des disques fixés à un arbre de rotation.

11. Procédé selon la revendication 10, dans lequel l'extrudat est transféré directement de la matrice de refroidissement au broyeur à marteaux.

12. Procédé selon l'une quelconque des revendications précédentes, comprenant en outre l'étape d'ajout de produit à base de viande dans ledit mélange.

13. Procédé selon la revendication 12, dans lequel ledit produit de viande est directement ajouté à ladite lave de protéine.

14. Procédé selon l'une quelconque des revendications précédentes, dans lequel ledit mélange présente une teneur en humidité totale comprise entre 15 % et 40 % en masse.

15. Procédé selon l'une quelconque des revendications précédentes, dans lequel ledit mélange comprend :
un mélange d'ingrédients secs, ledit mélange d'ingrédients secs constituant jusqu'à 50 % de masse de produit analogue à une viande et comprenant en masse 40 % de farine de soja dégraissée, 40 % de gluten vital de froment, 0,5 % de compléments vitaminés nutritionnels, 8,5 % de compléments minéraux, 2,0 % d'aromatisants, 4,3 % de colorants et 4,7 % de carbohydrate ;
un mélange d'humidifiants, ledit mélange d'humidifiants constituant jusqu'à 30 % de masse de produit analogue à une viande et comprenant 83 % de glycérol et 17 % de glucose en masse ; et
une matière à base de viande, ladite matière à base de viande constituant jusqu'à 20 % de masse d'extrudat et consistant en une matière finement hachée dérivée d'un ou plusieurs animaux choisis dans le groupe consistant en les volailles, les poissons, les ovins, les bovins et les porcins.

16. Produit analogue à une viande produit par un procédé selon l'une quelconque des revendications précédentes.
